# FASCICULE DE BREVET EUROPEEN

(11) **EP 0 623 777 B1**
(45) Date de publication et mention de la délivrance du brevet: **12.08.1998**
(21) Numéro de dépôt: 94400979.4
(22) Date de dépôt: 05.05.1994
(51) Int. Cl.: F16L 33/02

(54) **Collier de fixation articulé**
Angelenkte Rohrschelle
Articulated pipe clamp

(30) Priorité: 06.05.1993 FR 9305428
(43) Date de publication de la demande: 09.11.1994
(73) Titulaire: SERFLEX S.A., F-94501 Champigny sur Marne Cédex (FR)
(72) Inventeur: Le Noan, Jacques, F-78780 Conflans Sainte-Honorine (FR); Busson, Jean-Pierre, F-93160 Noisy le Grand (FR)
(74) Mandataire: Descourtieux, Philippe

(56) Documents cités:
- DE-C- 835 381
- GB-A- 768 326
- GB-A- 1 048 778
- US-A- 3 572 394

## Description

On connaît déjà de nombreux types de colliers de fixation constitués par une bande, généralement métallique, enroulée sur elle-même. A chaque extrémité de la bande sont prévus des moyens complémentaires de serrage et/ou d'accrochage. A cet égard on citera notamment les brevet EP-A-3192, le brevet FR-A-2.410.757 ou encore le brevet EP-A-113 624.

Dans certaines applications, en particulier pour la fixation, sur un manchon rigide, d'une gaine souple armée de grand diamètre on rencontre diverses difficultés pour assurer un montage correct et stable du collier.

C'est notamment le cas si la gaine souple ou tout autre conduit tubulaire analogue présente à sa surface extérieure une nervure hélicoïdale dont l'une des spires doit être franchie par le collier.

L'invention a donc pour objet d'améliorer la stabilité des colliers de fixation sur une gaine souple, quelle que soit la forme des aspérités ou nervures pouvant apparaître à la surface extérieure de la gaine, notamment si ces nervures sont faiblement inclinées sur son axe et que le collier doit être disposé dans la zone séparant deux spires consécutives.

Il faut ici signaler que l'on connaît par le brevet US-A-3,475,793 un collier comportant au moins deux portions de bande dont les extrémités sont liées l'une à l'autre au moyen de crochets radiaux portés par l'une des extrémités et pénétrant dans des perforations prévues à l'autre extrémité. Une telle liaison de deux portions adjacentes de bande assure une certaine articulation de l'une par rapport à l'autre autour d'un axe sensiblement vertical. Il est certain cependant que cette articulation ne permet qu'une très faible orientation angulaire des deux portions de bande.

Le problème qui est évoqué plus haut est résolu, selon l'invention, par un collier comportant uniquement trois portions de bande et présentant l'ensemble des caractéristiques énoncées par la revendication unique.

Grâce à ces dispositions, le franchissement d'une aspérité, notamment d'une spire d'une nervure hélocoïdale, s'effectue par la portion médiane de la bande, sous un angle pouvant être voisin 90°, les deux autres portions assurant elles-mêmes le serrage efficace de la gaine ou autre conduit tubulaire sur son manchon.

L'invention sera mieux comprise et ses avantages ainsi que quelques caractéristiques secondaires apparaîtront au cours de la description d'un exemple de réalisation en référence au dessin annexé dans lequel :
- La figure 1 est une vue extérieure partielle en élévation d'un collier selon l'invention,
- La figure 2 est une vue de côté du collier monté sur une gaine comportant une nervue hélicoïdale saillante.

Si l'on se reporte au dessin, on voit un collier constitué par une bande métallique, désignée par la référence générale ***1***, enroulée sur elle-même.

Sur l'une des extrémités de la bande est fixée une cosse ***2*** à l'intérieur de laquelle est montée une vis ***3*** qui peut entrer en prise avec une crémaillère ***4*** emboutie dans la bande, au moins sur une certaine longueur à partir de l'autre extrémité.

Le collier est donc du type décrit par le brevet FR-A-2.410.757 mais il est évident que les moyens de serrage et/ou d'accrochage ***3***, ***4*** pourraient être remplacés par des moyens d'un autre genre.

La bande ***1*** est essentiellement constituée par trois portions distinctes ***1a***, ***1b*** et ***1c***, les moyens de serrage et/ou d'accrochage étant disposés à l'une des extrémités des portions extrêmes ***1a*** et ***1c***. La portion médiane ***1b*** est elle-même articulée, par ses propres extrémités, aux autres extrémités en regard des portions ***1a*** et ***1c***, au moyen de pivots 5, 6 généralement constitués par des rivets.

Dans l'exemple représenté, seule la portion ***1c*** présente une crémaillère ***4***, les deux autres pouvant être lisses.

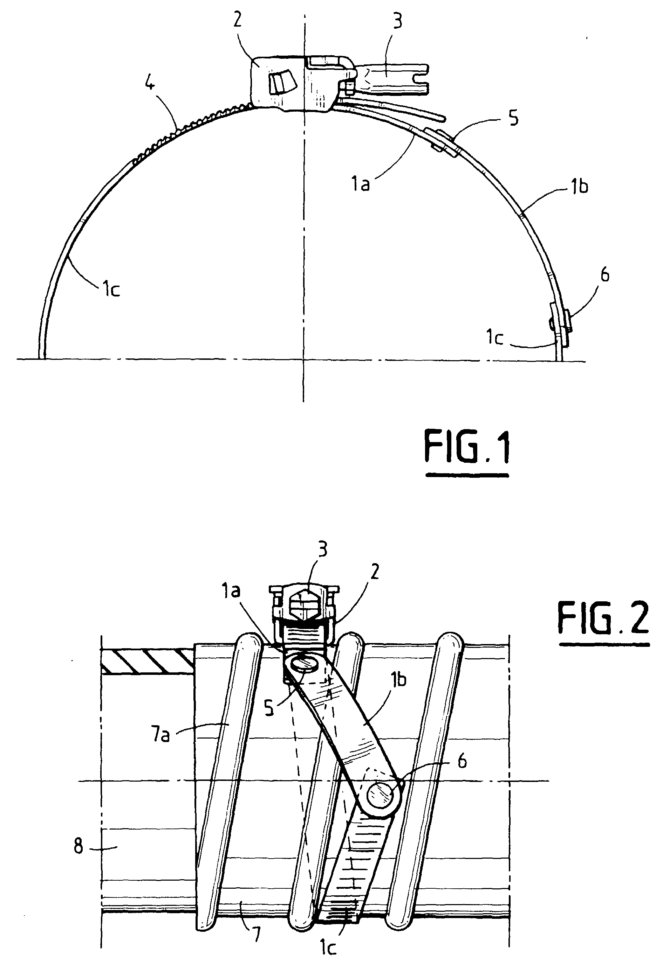

En se reportant à la figure 2, on voit une gaine souple ***7****,* par exemple une gaine de ventilation montée par emmanchement à l'extrémité du manchon ***8***, représenté partiellement en coupe. La gaine ***7*** comporte une nervure hélicoïdale ***7a*** qui fait saillie sur sa surface extérieure.

Pour assurer la fixation de la gaine ***7*** sur le manchon ***8*** , la bande ***1*** du collier, et plus précisément ses portions ***1a*** et ***1c*** sont disposées entre deux spires consécutives de la nervure ***7a*** cependant la portion médiane ***1b*** est pivotée sur les portions adjacentes pour permettre le franchissement de la nervure.

Ainsi, dans la zone située entre deux spires, la bande du collier peut adopter une forme hélicoïdale qui lui permet de s'appuyer convenablement et de façon stable sur la gaine et d'assurer de ce fait une bonne étanchéité du raccordement. En outre, compte tenu de l'angle relativement important sous lequel la portion ***1b*** franchit la spire, la perte d'étanchéité dans cette zone peut être notablement réduite par rapport à celle que l'on constatait avec les colliers connus.

## Revendications

1. Collier de fixation constitué par une bande, généralement métallique, enroulée sur elle-même et comportant à chacune de ses extrémités des moyens complémentaires (*3*, *4*) de serrage et/ou d'accrochage, la bande (*1*) comportant au moins deux portions dont les extrémités sont articulées l'une sur l'autre autour d'un axe sensiblement radial, caractérisé en ce que la bande comporte uniquement trois portions *(1a, 1b, 1c),* la portion médiane *(1b)* étant articulée sur les deux autres portions *(1a et 1c)* au moyen de pivots *(5, 6)*.

## Patentansprüche

1. Befestigungsschelle bestehend aus einem Band, im allgemeinen aus Metall, das über sich selbst gerollt ist und an jedem seiner Enden komplementäre Mittel (3, 4) zum Klemmen und/oder Verrasten vorgesehen sind, wobei das Band (1) mindestens zwei Teile aufweist, deren Enden miteinander um eine im wesentlichen radiale Achse gelenkig verbunden sind, dadurch gekennzeichnet, daß das Band lediglich drei Teile (1a, 1b, 1c) umfaßt, wobei der mittlere Teil (1b) mit den anderen beiden Teilen (1a und 1c) mittels Drehzapfen gelenkig verbunden ist.

## Claims

1. Clip formed by a wound strip generally of metal and provided at each of its end with complementary clamping and/or fastening means (3, 4), the stnp (1) comprising at least two portions the ends of which are hinged on to one another about a substantially radial axis, characterised in that the strip comprises only three portions (1a, 1b, 1c), the central portion (1b) being hinged on to the other two portions (1a and 1c) by means of pivots (5, 6).
